Europäisches Patentamt

European Patent Office

Office européen des brevets

(19)

(11) EP 1 180 559 A1

(12) **EUROPEAN PATENT APPLICATION**

(43) Date of publication:
**20.02.2002 Bulletin 2002/08**

(51) Int Cl.[7]: **D21H 21/18**, D21H 17/71
// D21H17/11, D21H17/07,
D21H17/35, D21H21/20

(21) Application number: **01117299.6**

(22) Date of filing: **17.07.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **04.08.2000 US 223251 P**

(71) Applicant: **Armstrong World Industries, Inc.
Lancaster Pennsylvania 17603 (US)**

(72) Inventors:
• **Howle, Matthew
  Hockessin, Delaware 19707 (US)**
• **Himmelberger, Karl B.
  Millersville, Pennsyslvania 17551 (US)**

(74) Representative: **Finck, Dieter, Dr.Ing. et al
v. Füner Ebbinghaus Finck Hano Mariahilfplatz 2
- 3
81541 München (DE)**

(54) **Binder composition for fibrous sheet**

(57)    A method and composition are disclosed for providing a two-part polymer binder additive for a fibrous sheet by improving both its strength and durability. The polymer binder comprises both the addition of a resin system and an anionic polymer which impart both increased strength and resistance to moisture and sagging. The resin system comprises a polyamidoamine-epihalohydrin resin and a latex and an anionic polymer.

**FIGURE 1**

Indents

EP 1 180 559 A1

**Description**

FIELD OF INVENTION

The present invention generally relates to fibrous sheets and more specifically to polymer additives for fibrous sheets.

BACKGROUND

Fibrous sheets are used for a variety of different purposes and are comprised of an array of different fibers, binders and fillers. For example, fibrous sheets can be used as acoustical ceiling tiles, paper products and furniture board. Primarily, fibrous sheets can be comprised of mineral wool, perlite, cellulosic fibers, fillers and binders.

Fibrous sheet production utilizes combinations of fibers, fillers, bulking agents, binders, water, surfactants and other additives mixed into a slurry and processed into a fibrous sheet. Examples of fibers used may include mineral fiber, fiberglass, and cellulosic material. Mineral wool is a lightweight, vitreous, silica-based material spun into a fibrous structure similar to fiberglass. Cellulosic material is typically in the form of newsprint. Added fillers may include expanded perlite, brightners such as titanium oxide and clay. Expanded perlite reduces material density and clay enhances fire resistance. Examples of binders used in fibrous sheets include starch, latex and reconstituted paper products, which link together and create a binding system locking all ingredients into a structural matrix.

Organic binders, such as starch, are often the primary component providing structural adhesion for the fibrous sheet. Starch is often the preferred organic binder because it is relatively inexpensive. For example, fibrous sheets containing newsprint, mineral wool and perlite are often bound together by starch. Starch imparts both strength and durability to the fibrous sheet structure.

Unfortunately, there is a limit on how much starch can be added before such properties begin to decline. Starch is highly water-soluble and when partially hydrolyzed loses a portion of its ability to bind the fibrous sheet components. Additionally, water-felted and cast panels tend to exhibit limited stability under high moisture loads given the hydrophilic nature of the cellulosic fibers. Furthermore, fibrous sheet strength and durability cannot simply be enhanced by using increased quantities of starch and cellulose, since starch increases a fibrous sheet's susceptibility to moisture and sag.

Thus, a high degree of starch and cellulose can lead to sagging and weakening of the board. Also, fibrous sheets having large quantities of starch require elevated drying rates to remove excess water from the board. Therefore, there a need for a method for increasing both the strength and durability of a fibrous sheet without the addition of increased quantities of starch. Additionally, there is a need for a fibrous sheet that is not susceptible to sagging under high moisture loads and does not require increased drying times during processing.

SUMMARY

The present invention encompasses both a method and composition for providing a two-part polymer binder additive for a fibrous sheet for improving both its strength and durability. The two-part polymer binder may be added to augment current organic binders to increase such desirable board properties as strength and durability or the polymers may be added to reduce the amount of organic binder required. Additionally, the polymers may be added in place of conventional organic binders or added to improve sag resistance in highly moist environments.

The two-part polymer binder comprises both the addition of a resin system and an anionic polymer which impart both increased strength and resistance to moisture and sagging. The resin system comprises a polyamidoamine-epihalohydrin resin and a polymer having repeating units derived from an alkyl halide having at least one double bond and an alkene.

The method of forming an enhanced fibrous sheet includes the steps of forming a fibrous slurry and mixing into the fibrous slurry a resin system. The resin system comprises a polyamidoamine-epihalohydrin resin and a polymer having repeating units derived from an alkyl halide having at least one double bond and an alkene. Next, added into the mix is an anionic polymer to form a flocculated mix, which is then formed into a fibrous sheet. The fibrous sheet is then dried to form the finished product.

Additionally, a fibrous sheet is provided comprising at least one type of fiber and an organic binder. The fibrous sheet also contains a resin system comprising a polyamidoamine-epihalohydrin resin and a polymer having repeating units derived from an alkyl halide having at least one double bond and an alkene. Furthermore, an anionic polymer is also contained within the fibrous sheet.

BRIEF DESCRIPTION OF THE DRAWINGS

In the drawings:

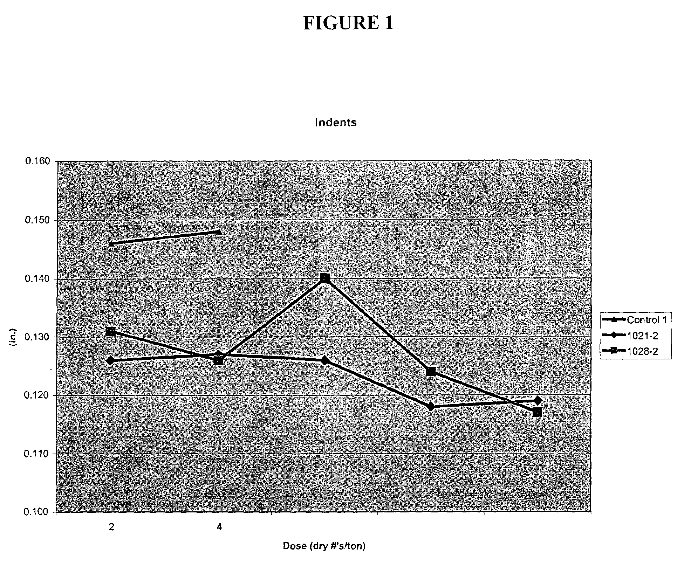

Figure 1 is a graphical presentation of the plotted indentation data of the control samples as compared to the samples containing the additive polymers of the present invention;

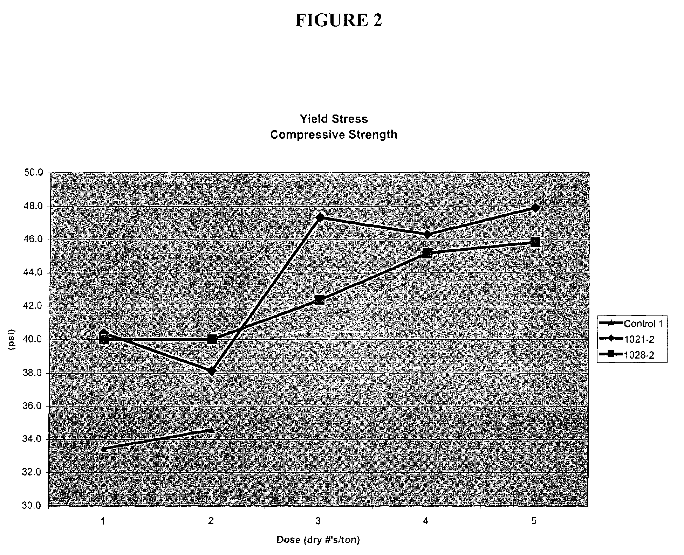

Figure 2 is a graphical presentation of the plotted compressive yield strength data of the control samples as compared to the samples containing the additive polymers of the present invention;

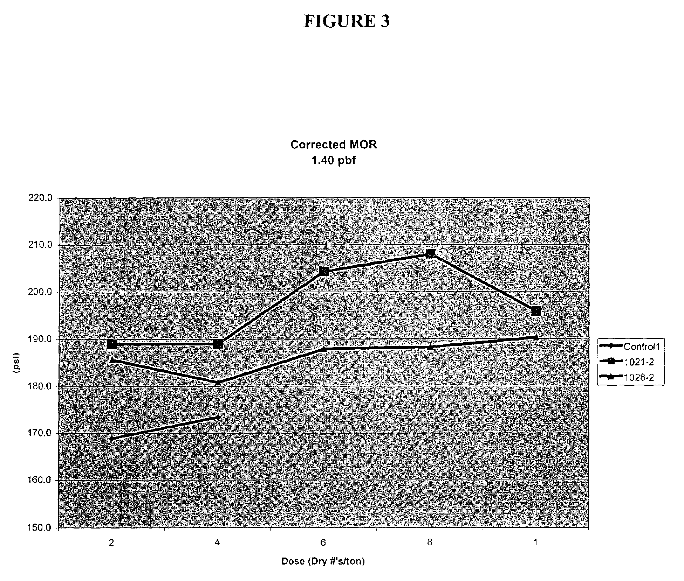

Figure 3 is a graphical presentation of the plotted modulus of rupture (MOR) data of the control samples as compared to the samples containing the additive polymers of the present invention;

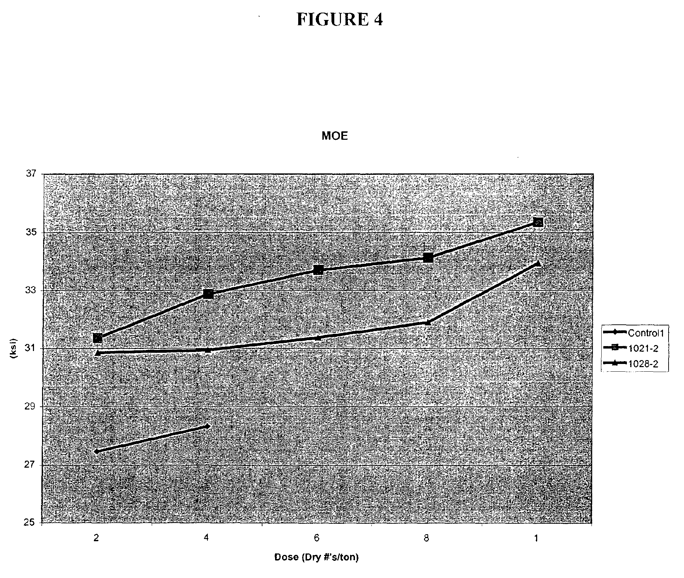

Figure 4 is a graphical presentation of the plotted modulus of elasticity (MOE) data of the control samples as compared to the samples containing the additive polymers of the present invention;

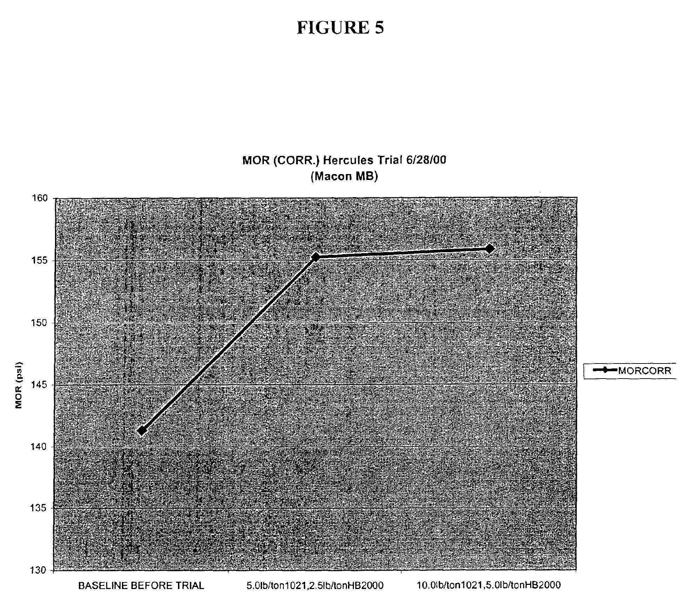

Figure 5 is a graphical presentation of the plotted modulus of rupture (MOR) data of a fiber board sample prepared using an inline process run as opposed to a batch process containing the additive polymers of the present invention; and

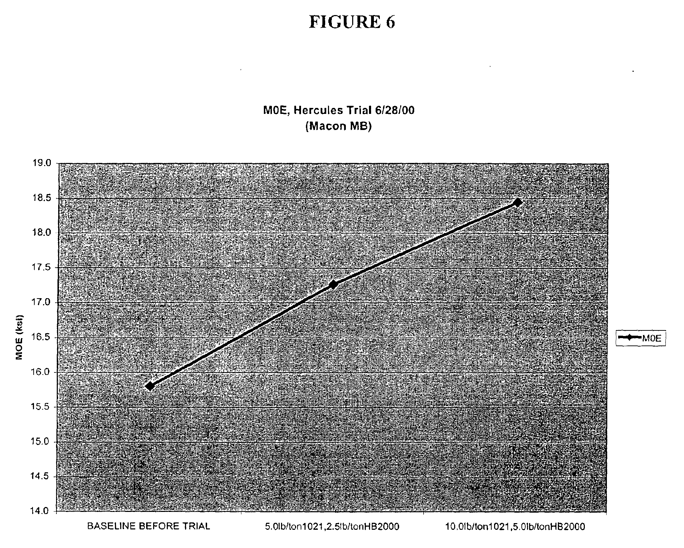

Figure 6 is a graphical presentation of the plotted modulus of elasticity (MOE) data of a fiber board sample prepared using an inline process run as opposed to a batch process containing the additive polymers of the present invention.

DETAILED DESCRIPTION

The present invention encompasses both a method and composition for providing a two-part polymer binder additive for a fibrous sheet by improving both its strength and durability. The polymer binder comprises both the addition of a resin system and an anionic polymer which impart both increased strength and resistance to moisture and sagging. The resin system comprises a polyamidoamine-epihalohydrin resin and a polymer having repeating units derived from an alkyl halide having at least one double bond and an alkene.

The resin system is essentially a polyamidoamine-epihalohydrin resin combined with a latex whereby the resin imparts a cationic charge on the surface of the latex. The fibrous slurry is commonly anionic and readily associates with the cationic resin system. The resin system preferably precedes the addition of the anionic polymer.

The anionic polymer is preferably added to the fibrous slurry after the addition of the resin system. The polymer is preferably a polyacrylamide copolymer, such as HERCOBOND 2000® available from Hercules Incorporated. of Wilmington, Delaware. The addition of the polymer adds a negative charge to the fibrous slurry and aids in the creation of a complex which imparts both durability and strength to the finished fibrous sheet.

The ratio of resin system to anionic polymer added to the fibrous slurry by weight is preferably about 2:1. The ratio may be smaller or larger than that which is preferred, such as for example 1:1 or 3:1. Additionally, in one embodiment, the resin system is added to the fibrous slurry in an amount between about 2 pounds to 16 pounds per ton of fibrous slurry. Furthermore, the anionic polymer is added to the fibrous slurry in an amount between about 1 pound to 8 pounds per ton of fibrous slurry. Of course, even greater amounts may be added to the slurry if the organic binder is to be replaced by or reduced by the added wet and dry binders. Essentially, the upper limit on the quantity of wet and dry binder added to the fibrous slurry is limited by economic factors since most organic binders such as starch are relatively inexpensive as compared to the wet and dry polymer binders of the present invention.

The resin system comprises a mixture of a polyamidoamine-epihalohydrin, and a component which cooperates with or moderates its properties and is preferably selected from flexibilizing components. Without wishing to be bound by any one theory, it is believed that the flexibilizing component functions to hinder crosslinking of the polyamidoamine-epihalohydrin. Such a resin system is described in more detail in U.S. Patent Application No. [Attorney Docket No. P19657.507] and is incorporated by reference as though set forth in full within this application.

In greater detail, the polyamidoamine-epihalohydrin resin preferably includes polyamidoamine-epihalohydrin resins such as those disclosed in U.S. Patents No. 2,926,116 and 2,926,154 to KEIM, incorporated by reference in their entirety herein. Polyamidoamine-epihalohydrin resins can also be prepared in accordance with the teachings of U.S. Patent No. 5,614,597 to BOWER and commonly assigned to Hercules Incorporated, incorporated by reference in their entirety herein. As discussed in U.S. Patent No. 5,614,597 to BOWER, these processes typically involve reacting aqueous polyamidoamine with an excess of epihalohydrin to completely convert amine groups in the polyamidoamine to epihalohydrin adducts. During the reaction, halohydrin groups are added at the secondary amine groups of the polyamidoamine.

After the epihalohydrin has been added and when heat evolution has subsided, the reaction mixture is heated to effect crosslinking and viscosity increase. During this reaction, azetidinium groups are formed. These functional groups are typically employed to impart wet strength to paper by forming a strong crosslinked network with the paper fibers.

Preferred polyamidoamine-epihalohydrin resins include polyamidoamine-epichlorohydrins such as those sold by Hercules Incorporated of Wilmington, Delaware, under various trade names. Preferred polyamidoamine-epihalohydrin resins available from Hercules include the KYMENE® resins and the HERCOBOND® resins; KYMENE 557H® resin; KYMENE 557LX® resin; KYMENE 557SLX® resin; KYMENE 557ULX® resin; KYMENE 557ULX2® resin; KYMENE 709® resin; KYMENE 736® resin; and HERCOBOND 5100® resin. Of these, KYMENE 557H® resin and HERCOBOND 5100® are especially preferred polyamidoamines, available in the form of aqueous solutions. It is expressly contemplated that equivalents to each of the foregoing resins are within the scope of the present invention.

Preferred materials for the flexibilizing component include copolymers of alkyl halides and alkenes, such as copolymers of vinyl or allyl halides and alkenes. Any alkyl halide and any alkene, which copolymerize to form copolymers with each other, may be employed. Preferred alkyl halides include allyl and/or vinyl halides of from 2-12 C atoms, preferable from 2-6 C atoms, more preferably from 2-4 C atoms and most preferably about 2 C atoms. Copolymers of vinyl halides (especially vinyl chloride) and alkenes, preferably of from 2-12 C atoms, preferably from 2-6 C atoms, more preferably from 2-4 C atoms and most preferably of about 2-3 C atoms. Propylene and/or ethylene, are especially preferred.

Copolymers of vinyl chloride and ethylene may be employed as the flexibilizing component. Exemplary copolymers of vinyl chloride and ethylene are disclosed in U.S. Patent No. 4,673,702 to IACOVIELLO, and U.S. Patent No. 4,962,141 to IACOVIELLO, et al., incorporated by reference in their entireties herein. These copolymers (also referred to herein as "EVC1" copolymers) may be prepared in any way. By way of example, they may be prepared (preferably in the form of an emulsion) as described in U.S. Patent No. 4,962,141 to IACOVIELLO, et al.

Suitable EVC1 copolymer emulsions may be prepared by copolymerizing the monomers in the presence of suitable emulsifying agents, such as protective colloids and surfactants, in a aqueous medium under pressures generally not exceeding about 100 atm and in the presence of a redox system which is added incrementally. The copolymerization reaction is performed under an ethylene pressure which is sufficient to provide the copolymer with about 5 to 35 wt% ethylene content, preferably about 15 to 25 wt%. Pressures of about 50 to 100 atm are generally used to afford such an ethylene content.

The EVC1 copolymer emulsions may additionally contain from 0.1 to 30 wt% of an external crosslinking agent based upon the total weight of the copolymer. Suitable external crosslinking agents include melamine/formaldehyde resins, polyisocyanates such as water dispersible polymeric methyl diphenyl diisocyanates and water based phenolic resins.

In carrying out the polymerization, substantially all of the polyvinyl alcohol and a portion of the vinyl chloride are initially charged into the polymerization vessel which is then pressured with ethylene. At least about 5 wt% and preferably at least about 15 wt% of the total vinyl chloride to be polymerized is initially charged into the reactor. The remainder of the vinyl chloride is added after the initially charged vinyl chloride monomer content has been substantially reduced. A controlled addition avoids over pressurization of the reactor. No more than 60% of the vinyl chloride should be charged initially since a prepolymer must be generated in-situ in order to obtain the desired stable emulsions.

The quantity of ethylene entering the copolymer is influenced by pressure, mixing, addition rate and the amount of free radical generating source. The ethylene content of the polymer can be enhanced by increasing the ethylene pressure, increasing agitation and increasing the free radical source rate.

The process of forming EVC1 copolymer emulsions may comprise preparing an aqueous solution containing a polyvinyl alcohol dispersing agent. The aqueous solution and initial charge of vinyl chloride may be added to the polymerization vessel and ethylene pressure may then be applied to the desired value. The mixture is mixed thoroughly to dissolve ethylene in the vinyl chloride and into the water phase. The charge can be conveniently elevated to polymerization temperature during this mixing period. A polymerization temperature of about 55°C and an ethylene pressure in the range of 750 psig to 1000 psig may be employed to provide a copolymer with about 20-30 wt% ethylene. Mixing can be effected by means of an agitator or other known mechanism.

The polymerization is initiated by introducing initial amounts of a free radical generating source into the reactor vessel containing the monomer premix. When employing a redox system, either the oxidant or reductant component can be added initially to the aqueous medium containing the polyvinyl alcohol and vinyl chloride with the other redox component added to initiate the reaction. Upon initiating the polymerization, any desired monomer such as the hydroxyalkyl- or carboxylic acid-containing functional co-monomers disclosed herein may be added incrementally to the reaction vessel.

The reaction may generally be continued until polymerization is no longer self-sustaining and desirably until the residual vinyl chloride content is below 0.5%. The completed reaction product is removed from the presence of ethylene and maintained at a temperature above the Tg of the copolymer while sealed from the atmosphere. The reaction mixture can also be transferred to a degasser for removal of unreacted ethylene.

One skilled in the art would appreciate that generically or specifically defined reactants and conditions can be substituted by equivalent reactants and conditions. Especially preferred copolymers for the flexibilizing component include those marketed by Air Products and Chemicals, Inc., of Allentown, Pennsylvania, under the trade name AIRFLEX® ; especially, AIRFLEX 4530® . It is expressly contemplated that equivalents to such vinyl chloride/ethylene copolymers are within the scope of the present invention.

Other materials for the flexibilizing component include FLEXBOND 325® (vinyl acetate-acrylic copolymer latex), LUCIDENE 243® (styrene-acrylic polymer emulsion), HYCAR 26256® (acrylic ester copolymer latex) and MORKOTE 1725® (acrylic copolymer emulsion). Additionally, water compatible systems such as copolymers can contain the following monomers: methyl methacrylate, butyl acrylate, styrene vinylidene chloride, acrylic acid, and methacrylic acid. Suitable copolymers include acrylated urethanes prepared by reacting a hydroxy acrylate or methacrylate; a diol, polyester or diamine; and a diisocyanate can be used. Preferred monomers are disclosed in U.S. Patent 5,716,603, which is hereby incorporated by reference as though set forth in full herein for its teachings in this regard. Other copolymers that appear to be useful include acrylic and vinyl acrylic-based materials.

The anionic component of the two-part polymer binder additive is an anionic polymer preferably added by weight in the ratio of one part per two parts resin system. The polymer can be any linear, branched or crosslinked anionic polymer. The polymer may be a natural or synthetic polymer. For example, the natural polymer may be carboxymethylcellulose (CMC) and the synthetic polymer may be an acrylic.

The anionic polymer is preferably water soluble and by way of example may be comprised of an acrylamide or acrylic polymer or combinations thereof. The molecular weight of the anionic polymer is not critical, but is preferred to be within a range of up to about 1 million. Of course, the molecular weight can be greater than the preferred range which is contemplated for use within the present two-part polymer system. Polymers having a very low molecular weight are essentially limited only by economics, since more polymer must be added to give a desired result.

In an embodiment, the preferred anionic polymer is a water soluble acrylamide terpolymer described in U.S. Patent No. 5,543,446 and incorporated by reference as though set forth in full within this application. The terpolymer comprises a (meth)acrylamide, an ethylenically saturated, aliphatic carboxylic acid or salt and a water-soluble polyvinyl monomer. An example of such a terpolymer can be acrylamide/acrylic acid/methylene-bis-acrylamide having a molar ratio of about 92/8/0.018. As can be seen from this example the water-soluble polyvinyl monomer component of the terpolymer comprises only a fraction of the terpolymer's total composition, thus copolymers of acrylamide and acrylic acid may also be used.

While not being bound to any one theory, it is believed that the two-part polymer binder forms a complex, which is crosslinked and forms a lattice work around the negatively charged fibers of the slurry sheet forming the board. The resin system is cationic and the anionic polymer is anionic. The resin system is preferably added first to the fibrous slurry since the slurry is negatively charged and is attracted to the positively charged resin system. The anionic polymer is preferably added after the resin system as the negative charged dry binder can then bind and crosslink with the positively charged resin system to form a complex.

**Examples**

The invention will be more easily understood by referring to the examples of the invention and the control examples that follow. The following examples are given for illustrative purposes and are not be understood as limiting the present invention.

The modulus of rupture (MOR) of the board is measured by the procedure given in ASTM D-1037. MOR is calculated as being equal to $3PL/2bd^2$ psi where:

   P = peak force required to break the samples (lbs.)
   L = span between the sample supports (inches)
   b = width of the sample (inches)
   d = thickness of the sample (inches)
   MOR is corrected for density variations by multiplying by $D^2$ where D = desired density/actual density, wherein the desired density is 1.40.

The modulus of elasticity (MOE) is essentially the measure of flexibility and can be determined using the equation below:

$$MOE = \left(\frac{1}{4}\right) \cdot \left(\frac{L}{t}\right)^3 \cdot \left(\frac{1}{w}\right) \cdot \left(\frac{F}{d}\right)$$

where:

   MOE = Modulus of elasticity in flexure, [psi]
   L = Length of test span, [in]

*t* = Thickness of the sample, [in]
*w* = Width of the sample, [in]

$$\left(\frac{F}{d}\right) = \text{Slope of the force - deflection curve recorded by the Instron, } [lbf / in]$$

The density of the board products set forth in the following examples is expressed in pounds per board foot (pfd), and is determined by weighing a sample board having dimensions of one foot square and a thickness of one inch. The density calculation for thinner or thicker boards is computed by dividing the weight of a one foot square board sample by the thickness of the board sample expressed in inches.

The resin system component, known herein as Example A, can be prepared by adding 42.2 dry grams of KYMENE 557H wet strength resin available from Hercules Incorporated of Wilmington Delaware, to 25 dry grams of Airflow 4530 available from Air Products and Chemicals, Inc. of Allentown Pennsylvania, with mechanical stirring. Next is added 62.5 grams of demineralized water to the mixture to yield a slightly blue opaque white dispersion that is then stirred for about 15 minutes at room temperature.

The resin system component, known herein as Example B, can be prepared by adding 100 grams of Hercon® 70 sizing emulsion available from Hercules Incorporated of Wilmington Delaware to 100 grams of Example A to yield an opaque white dispersion. The dispersion is then stirred for about 15 minutes at room temperature.

TABLE 1

| Sample | 1 | 2 | 3 | 4 | 5 | 6 | 7 | 8 | 9 | 10 |
|---|---|---|---|---|---|---|---|---|---|---|
| Example A (lbs/ton) | 2 | 4 | 6 | 8 | 10 | | | | | |
| Example B (lbs/ton) | | | | | | 2 | 4 | 6 | 8 | 10 |
| HERC 2000 (lbs/ton) | 1 | 2 | 3 | 4 | 5 | 1 | 2 | 3 | 4 | 5 |

Illustrated in Table 1, are ten sample handsheets prepared using various formulations for representing fibrous sheet formulations. Five samples were prepared using Example A as the resin system component and the other five were prepared using Example B as the resin system component. Hercobond 2000® , a polyacrylamide copolymer, was added to each handsheet formulation as the anionic polymer component. The resin system component and the anionic polymer component were added in the weight ratio of 2:1.

The raw materials comprising each of the handsheets include mineral wool, cellulose, broke (Scrap Board), clay (filler) and perlite.

The raw materials were added into a reactor vessel in the order listed above and mixed with water having a temperature between about 95°F and about 110°F. After the addition of each material, the ingredients were mixed for approximately one minute at a standard mixer speed setting of 6 spd. Once the raw materials were mixed, the resin system component was added and mixed with the raw materials for about 1-3 minutes. After the addition of the resin system component, Hercobond 2000® was added and mixed for about 1-3 minutes. A retention aid, Hercules 8102E, was also added and mixed for about 1-3 minutes after the addition of the Hercobond 2000® .

The formed fibrous mix of raw materials and component polymers was formed and pressed into a fibrous sheet of about 14 inches wide by 26 inches in length. The fibrous sheet was first drained for about 25 seconds and vacuum treated after about 15 seconds to a thickness of about ♂ inch. The sheet was then further pressed to a thickness of about ½ inch on a porous plate with pressing conditions pressed to stops of greater than 7 tons and gauge pressure of 30 seconds. The sheet was then wrapped in foil and dried for about 1.25 hours at 375°F and then unwrapped and dried for about 2.25 hours at 375°F. The sheets wee wrapped in foil to aid in the gelling of the starch under test conditions. Foil sheets are not required under typical production runs in an operational plant. The density of the finished handsheets ranged from between about 1.15 to about 1.25 pounds per board foot.

TABLE 2

| Sample | MOR (psi) | MOE (ksi) |
|---|---|---|
| Control 1 | 168.9 | 27.47 |
| Control 2 | 173.4 | 28.33 |
| 1 | 189.0 | 31.36 |
| 2 | 189.0 | 32.88 |

TABLE 2   (continued)

| Sample | MOR (psi) | MOE (ksi) |
|--------|-----------|-----------|
| 3 | 204.3 | 33.71 |
| 4 | 208.0 | 34.13 |
| 5 | 195.8 | 35.35 |
| 6 | 185.6 | 30.85 |
| 7 | 180.8 | 30.94 |
| 8 | 187.9 | 31.38 |
| 9 | 188.3 | 31.90 |
| 10 | 190.3 | 33.94 |

Table 2 illustrates the modulus of elasticity (MOE) and the modulus of rupture (MOR) of the test sample handsheets, plus two control sheets formed from the same components, except for the additive polymers of the present application. Table 2 highlights that the handsheets formed with the additive polymers of the present application have improved MOE and MOR qualities as opposed to the control sheets which were formed without the additives.

TABLE 3

| Experiment | Amount of Additive (%) | | | Dry Tensile (lb/in) | Wet Tensile (lb/in) | Wet Tensile/ Dry Tensile (%) |
|------------|-----------------|----------------------|-------------------|---------------------|---------------------|------------------------------|
|  | Kymene 557H | PPD D-Exampl e A | Hercobond 2000 | | | |
| 1 (Control) | 0 | 0 | 0 | 25.6 | 0.7 | 3 |
| 2 | 0.5 | 0 | 0 | 27.8 | 6.9 | 25 |
| 3 | 1.0 | 0 | 0 | 29.5 | 8.5 | 29 |
| 4 | 0 | 1.0 | 0 | 30.4 | 7.5 | 25 |
| 5 | 1.0 | 0 | 0.5 | 31.3 | 10.0 | 32 |
| 6 | 0 | 1.0 | 0.5 | 29.4 | 7.8 | 27 |
| 7 (Control) | 0 | 0 | 0 | 19.4 | 0.4 | 2 |
| 8 | 0.5 | 0 | 0 | 22.2 | 4.2 | 19 |
| 9 | 1.0 | 0 | 0 | 23.5 | 4.3 | 18 |
| 10 | 0 | 1.0 | 0 | 24.1 | 4.8 | 20 |
| 11 | 1.0 | 0 | 0.5 | 25.4 | 5.4 | 21 |
| 12 | 0 | 1.0 | 0.5 | 24.5 | 4.8 | 20 |

Illustrated above in Table 3 are the experimental test results for various cellulosic sheets of paper. The sample sheets were prepared by introducing one or more of the following polymer components, Example A, KYMENE® 557H and HERCOBOND® 2000 into the pulp mix. Additionally, two control samples were produced which did not include the addition of the above polymer components.

Samples 1 through 6 were prepared using a mixture of Townsend Paper unbleached kraft pulp and Stone Container double-lined kraft pulp (which was washed after repulping) in a ratio of about 3 to 1, respectively. Samples 7-12 were prepared using a mixture in a ratio of about 1 to 1 of Georgia Pacific St. Croix Northern Hardwood and Georgianier J Softwood pulp.

The paper samples were prepared on the JACKSONVILLE PAPER MACHINE (a pilot paper machine) and refined to 408 cc CSF ("Canadian Standard Freeness") for sample sheets 1-6 and 485 cc CSF for sample sheets 7-12. The dilution water had 25 pm alkalinity ($NaHCO_3$) and 50 pm hardness ($CaCl_2$).

The test samples were either prepared with Example A or KYMENE® 557H. Additionally, HERCOBOND® 2000 was added to both the Example A and KYMENE® 557H containing samples. The test data illustrates that the two-part polymer formulation can be used to impart wet and dry strength to paper. For example, the test data indicates that Example A, which is about 63% KYMENE® 557H and 37% Airflex 4530, provides good wet strength, as measured by the ratio of wet tensile to dry tensile in experiments 4 and 10 when compared with experiments 2, 3, 8 and 9. Additionally, when HERCOBOND® 2000 is added both wet and dry strength are improved as illustrated in experiments 5, 6, 11 and 12.

While Applicants have set forth embodiments as illustrated and described above, it is recognized that variations may be made with respect to disclosed embodiments. Therefore, while the invention has been disclosed in various forms only, it will be obvious to those skilled in the art that many additions, deletions and modifications can be made without departing from the spirit and scope of this invention, and no undue limits should be imposed except as set forth in the following claims.

**Claims**

1.    A polymer binder for a fibrous sheet comprising:

      a resin system comprising a polyamidoamine-epihalohydrin resin and a polymer having repeating units derived from an alkyl halide having at least one double bond and an alkene; and
      an anionic polymer.

2.    The binder of claim 1, wherein the ratio of resin system to anionic polymer is between about 3:1 to 1:1 by weight.

3.    The binder of claim 1, wherein the alkyl halide comprises a vinyl halide.

4.    The binder of claim 1, wherein the alkyl halide comprises a vinyl halide and the alkene comprises an olefin.

5.    The binder of claim 3, wherein the vinyl halide comprises vinyl chloride and the alkene comprises ethylene.

6.    The binder of claim 1, wherein the alkyl halide comprises a vinyl halide and the alkene comprises ethylene.

7.    The binder of claim 1, wherein the anionic polymer is a water soluble copolymer.

8.    A method of forming a fibrous sheet comprising:

      forming a fibrous slurry;
      mixing into the fibrous slurry a resin system comprised of a polyamidoamine-epihalohydrin resin and a polymer having repeating units derived from an alkyl halide having at least one double bond and an alkene to form a wet strength mix;
      mixing into the wet strength mix an anionic polymer to form a flocculated mix;
      forming the flocculated mix into a fibrous sheet; and
      drying the fibrous sheet to form the fibrous sheet.

9.    The method of claim 8, wherein the ratio of added resin system to anionic polymer is between about 1:1 to about 3:1 by weight.

10.   The method of claim 8, wherein the resin system is added to the fibrous slurry in an amount between about 2 pounds to 16 pounds per ton of fibrous slurry.

11.   The method of claim 8, wherein the resin system is added to the fibrous slurry at about 10 pounds per ton of fibrous slurry.

12.   The method of claim 8, wherein the anionic polymer is added to the fibrous slurry in an amount between about 1 pound to 8 pounds per ton of fibrous slurry.

13.   The method of claim 8, wherein the anionic polymer is added to the fibrous slurry at about 5 pounds per ton of fibrous slurry.

**14.** The method of claim 8, wherein the alkyl halide comprises a vinyl halide.

**15.** The method of claim 8, wherein the alkyl halide comprises a vinyl halide and the alkene comprises an olefin.

**16.** The method of claim 15, wherein the vinyl halide comprises vinyl chloride and the alkene comprises ethylene.

**17.** The method of claim 8, wherein the alkyl halide comprises a vinyl halide and the alkene comprises ethylene.

**18.** The method of claim 8, wherein the anionic polymer is a polyacrylamide.

**19.** A fibrous sheet comprising:

at least one type of fiber;
a resin system comprising a polyamidoamine-epihalohydrin resin and a polymer having repeating units derived from an alkyl halide having at least one double bond and an alkene; and
an anionic polymer.

**20.** The fibrous sheet of claim 19, wherein the ratio of added resin system to anionic polymer is between about 1:1 to about 3:1 by weight.

**21.** The fibrous sheet of claim 19, wherein the fiber is selected from the group consisting of cellulose, mineral fiber, fiberglass, and combinations thereof.

**22.** The fibrous sheet of claim 19, further including an organic binder comprising a starch.

**23.** The fibrous sheet of claim 19, further comprising a filler selected from the group consisting of perlite, clay calcium carbonate and combinations thereof.

**24.** The fibrous sheet of claim 19, wherein the alkyl halide comprises a vinyl halide and the alkene comprises ethylene.

**25.** The fibrous sheet of claim 19, wherein the anionic polymer is a water soluble copolymer.

# FIGURE 1

**Indents**

# FIGURE 2

**Yield Stress
Compressive Strength**

# FIGURE 3

**Corrected MOR**
**1.40 pbf**

# FIGURE 4

**MOE**

# FIGURE 5

MOR (CORR.) Hercules Trial 6/28/00
(Macon MB)

# FIGURE 6

MOE, Hercules Trial 6/28/00
(Macon MB)

European Patent
Office

**EUROPEAN SEARCH REPORT**

Application Number

EP 01 11 7299

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | WO 01 03655 A (HERCULES INC) 18 January 2001 (2001-01-18) * page 13, line 1 - page 14, line 27; claims 1-58; example 1 * * page 4, line 10 - page 5, line 34 * | 1-6,8,19 | D21H21/18 D21H17/71 //D21H17/11, D21H17/07, D21H17/35, D21H21/20 |
| A | EP 0 549 925 A (HERCULES INC) 7 July 1993 (1993-07-07) * the whole document * | 1-25 | |
| A | WO 99 05361 A (HERCULES INC) 4 February 1999 (1999-02-04) * the whole document * | 1-25 | |
| A | EP 0 776 923 A (AKZO NOBEL NV) 4 June 1997 (1997-06-04) * the whole document * | 1-25 | |
| A | WO 98 06898 A (HERCULES INC) 19 February 1998 (1998-02-19) * the whole document * | 1-25 | TECHNICAL FIELDS SEARCHED (Int.Cl.7) |
| A | WO 98 03731 A (OLIVER STEPHEN M ;FINLAYSON MALCOLM F (US); SPRINGS KENNETH E (US)) 29 January 1998 (1998-01-29) * the whole document * | 1-25 | D21H C08L C09D |
| A | EP 0 006 360 A (MONSANTO CO) 9 January 1980 (1980-01-09) * the whole document * | 1-25 | |

The present search report has been drawn up for all claims

| Place of search | Date of completion of the search | Examiner |
|---|---|---|
| MUNICH | 5 October 2001 | Karlsson, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 11 7299

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2001

| Patent document cited in search report | | Publication date | Patent family member(s) | | Publication date |
|---|---|---|---|---|---|
| WO 0103655 | A | 18-01-2001 | AU | 6338500 A | 30-01-2001 |
| | | | WO | 0103655 A1 | 18-01-2001 |
| EP 0549925 | A | 07-07-1993 | US | 5316623 A | 31-05-1994 |
| | | | AU | 659895 B2 | 01-06-1995 |
| | | | AU | 2996092 A | 10-06-1993 |
| | | | CA | 2084851 A1 | 10-06-1993 |
| | | | DE | 69204270 D1 | 28-09-1995 |
| | | | DE | 69204270 T2 | 25-01-1996 |
| | | | EP | 0549925 A1 | 07-07-1993 |
| | | | ES | 2076000 T3 | 16-10-1995 |
| | | | MX | 9207099 A1 | 01-06-1993 |
| WO 9905361 | A | 04-02-1999 | US | 6294645 B1 | 25-09-2001 |
| | | | AU | 8511398 A | 16-02-1999 |
| | | | WO | 9905361 A1 | 04-02-1999 |
| | | | ZA | 9806682 A | 25-01-1999 |
| EP 0776923 | A | 04-06-1997 | EP | 0589917 A1 | 06-04-1994 |
| | | | EP | 0776923 A2 | 04-06-1997 |
| | | | AT | 169943 T | 15-09-1998 |
| | | | CA | 2111685 A1 | 23-12-1992 |
| | | | CZ | 9302765 A3 | 13-04-1994 |
| | | | DE | 69226699 D1 | 24-09-1998 |
| | | | DE | 69226699 T2 | 11-02-1999 |
| | | | DK | 589917 T3 | 25-05-1999 |
| | | | WO | 9222601 A1 | 23-12-1992 |
| | | | ES | 2120447 T3 | 01-11-1998 |
| | | | FI | 935703 A | 17-12-1993 |
| | | | HU | 66765 A2 | 28-12-1994 |
| | | | JP | 3104914 B2 | 30-10-2000 |
| | | | JP | 6508864 T | 06-10-1994 |
| | | | JP | 2000273170 A | 03-10-2000 |
| | | | PL | 169960 B1 | 30-09-1996 |
| | | | RU | 2110532 C1 | 10-05-1998 |
| | | | SK | 131893 A3 | 06-07-1994 |
| | | | US | 5516885 A | 14-05-1996 |
| WO 9806898 | A | 19-02-1998 | AU | 3913197 A | 06-03-1998 |
| | | | WO | 9806898 A1 | 19-02-1998 |
| WO 9803731 | A | 29-01-1998 | US | 5993604 A | 30-11-1999 |
| | | | AU | 3660597 A | 10-02-1998 |
| | | | CA | 2260884 A1 | 29-01-1998 |
| | | | EP | 0914519 A1 | 12-05-1999 |
| | | | JP | 2000503734 T | 28-03-2000 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.** EP 01 11 7299

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2001

| Patent document cited in search report | | Publication date | Patent family member(s) | | Publication date |
|---|---|---|---|---|---|
| WO 9803731 | A | | WO | 9803731 A1 | 29-01-1998 |
| | | | ZA | 9706384 A | 19-01-1999 |
| EP 0006360 | A | 09-01-1980 | AU | 529801 B2 | 23-06-1983 |
| | | | AU | 4811579 A | 03-01-1980 |
| | | | CA | 1155597 A1 | 18-10-1983 |
| | | | EP | 0006360 A1 | 09-01-1980 |
| | | | IT | 1121824 B | 23-04-1986 |
| | | | JP | 55012896 A | 29-01-1980 |

EPO FORM P0459

For more details about this annex : see Official Journal of the European Patent Office, No. 12/82